# EUROPÄISCHE PATENTSCHRIFT

(11) **EP 2 948 319 B1**
(45) Veröffentlichungstag und Bekanntmachung des Hinweises auf die Patenterteilung: **22.06.2016**
(21) Anmeldenummer: 14721321.9
(22) Anmeldetag: 29.04.2014
(51) Int. Cl.: F16B 21/06, B60B 3/14, F16B 21/16

(54) **VERRIEGELUNGSVORRICHTUNG**
LOCKING DEVICE
DISPOSITIF DE VERROUILLAGE

(30) Priorität: 30.04.2013 DE 102013104389
(43) Veröffentlichungstag der Anmeldung: 02.12.2015
(73) Patentinhaber: Resbig Technology GmbH, 65817 Eppstein (DE)
(72) Erfinder: STOCK, Bernd, 65207 Wiesbaden (DE)
(74) Vertreter: Aue, Hans-Peter
(86) Internationale Anmeldenummer: PCT/EP2014/058678
(87) Internationale Veröffentlichungsnummer: WO 2014/177537

(56) Entgegenhaltungen:
- DE-A1- 1 959 884
- US-A- 1 722 750
- US-A- 4 477 121

## Beschreibung

Die Erfindung betrifft eine Verriegelungsvorrichtung entsprechend dem Oberbegriff des Anspruchs 1 und wie sie aus Dokument US 4 477 121 A bekannt ist.

Aus dem Stand der Technik ist der Einsatz von Verriegelungsvorrichtungen zum Verbinden wenigstens zweier Bauteile aus einer Vielzahl von Technikbereichen bekannt. Beispielsweise ist bekannt, dass eine Befestigung von Radfelgen und damit einem Rad auf Radachsen mittels mehrerer Verschraubungen erfolgt. Die Verschraubungen werden kreisförmig um die Mittelachse auf der Radachse angeordnet. Bei Sportwagen ist bekannt, dass die Verbindung mittels einer einzigen zentralen Mutter oder Schraube erfolgt. In DE 61 00 25 A und DE 62 53 10 A werden alternative Verbindungsarten offenbart, in denen eine Verbindung der Radfelge mit der Radachse durch Verklemmen eines Klemmstücks erzielt wird.

Die oben genannten Verriegelungsvorrichtungen weisen den Nachteil auf, dass die Verbindung zwischen den Bauteilen zeitaufwendig ist, wenn drei bis fünf oder mehr Schrauben oder Muttern gelöst und wieder korrekt montiert werden können. Ferner besteht ein Nachteil darin, dass zum Verbinden der Schrauben oder Muttern ein Werkzeug, wie ein Drehmomentschlüssel, notwendig ist, welcher nicht immer zur Verfügung steht. Zudem ist ein hoher Kraftaufwand notwendig, um die Schrauben oder Muttern zu befestigen.

Eine weitere Verriegelungsvorrichtung ist beispielsweise aus der DE 19 59 884 A bekannt. Dort ist ein Schnellverschluss für Sicherheitsgurte in Kraftfahrzeugen offenbart, der einen Grundkörper und ein Verriegelungsmittel zum Verriegeln des Grundkörpers mit einem Gegenkörper aufweist. Der Schnellverschluss besteht aus einer Hülse und einem in diese einsteckbaren Sperrzapfen mit Organen zur Zusammenwirkung mit in der Hülse angeordneten Sperrkugeln, die durch eine federbelastete Hülse in nicht sperrender Lage gehalten werden, und bei Einführung des Sperrzapfens in die Hülse auf Sperreingriff mit dem Sperrzapfen geführt werden. Weiterhin ist ein Sicherheitsorgan vorgesehen, welches ein Verschieben der Hülse mittels eines anderen Organs als des Sperrzapfens verhindert.

Allerdings besitzt dieser Schnellverschluss den Nachteil, dass bei einer Betätigung des Betätigungsmittels dieses nicht selbsttätig in eine Verriegelungsposition überführt wird. Vielmehr erfolgt die Verriegelung derart, dass in der Bereitschaftsstellung des Verschlusses der Sperrzapfen in die Hülse eingesteckt wird. Dann verschiebt der Kopf die Hülse in Richtung nach unten. Sobald die Hülse mit ihrer Oberkante unter die querlaufenden Bohrungen gelangt ist, legt sie die Sperrkugeln frei, sodass diese, wenn auch der Kopf des Sperrzapfens an den Bohrungen vorbeigeführt worden ist, von der Feder durch Mitwirkung des Ringes in die Ausnehmung gepresst werden. Dann befindet sich der Schnellverschluss in der Sperrlage.

Auch wird das Betätigungsmittel durch die Verschiebevorrichtung nicht erst nach Überschreiten eines Totpunkts selbsttätig in die Verriegelungsposition bewegt.

Daher besteht die Aufgabe der Erfindung darin, eine Verriegelungsvorrichtung vorzusehen, die einfach handhabbar ist und eine Verbindung zwischen wenigstens zweien zu verbindenden Bauteilen ermöglicht, ohne dass die zuvor genannten Nachteile auftreten.

Diese Aufgabe wird durch eine Verriegelungsvorrichtung gelöst, die einen Grundkörper, ein Verriegelungsmittel zum Verriegeln des Grundkörpers mit dem Gegenkörper, ein zum Grundkörper relativ bewegbares Betätigungsmittel, das mit dem Verriegelungsmittel in Kontakt bringbar ist, und wenigstens eine, insbesondere mechanische, Verschiebevorrichtung aufweist. Die Verschiebevorrichtung ist mit dem Betätigungsmittel und dem Grundkörper, insbesondere unmittelbar, verbunden und bewegt bei einem Betätigen des Betätigungsmittels dieses selbsttätig in eine Verriegelungsposition. In der Verriegelungsposition ist das Betätigungsmittel mit dem Verriegelungsmittel in Kontakt und überführt dieses in eine Verriegelungsstellung. Ferner bewegt die Verschiebevorrichtung das Betätigungsmittel lediglich nach Überschreiten eines Totpunktes selbsttätig in die Verriegelungsposition.

Vorteilhafte Ausgestaltungen der Erfindung sind Gegenstand der abhängigen Ansprüche.

Eine derart ausgebildete Verriegelungsvorrichtung weist den Vorteil auf, dass zur Erzielung der Verbindung zwischen dem Grundkörper und dem Gegenkörper nicht eine Vielzahl von Befestigungsmitteln, wie beispielsweise Schrauben oder Muttern, eingesetzt werden müssen. Die Verbindung kann durch Betätigung eines einzigen Betätigungsmittels realisiert werden, wodurch sich der Zeitaufwand reduziert. Ein weiterer Vorteil der Verriegelungsvorrichtung ist, dass keine Werkzeuge mehr notwendig sind, da das Betätigungsmittels durch den Anwender per Hand betätigt werden kann. Durch die Verriegelungsvorrichtung kann eine sichere, lösbare mechanische Verbindung zwischen zweien Bauteilen hergestellt werden. Insbesondere kann die Verriegelungsvorrichtung zur Verbindung von starren sowie drehbaren Bauteilen eingesetzt werden und kann große mechanische Kräfte, sowie Drehmomente sicher übertragen.

Durch das Vorsehen der Verschiebevorrichtung, die das Betätigungsmittel selbsttätig in die Verriegelungsposition bewegt, ist kein hoher Kraftaufwand zum Verbinden des Grundkörpers mit dem Gegenkörper mehr notwendig. Ferner ist sichergestellt, dass der Grundkörper immer mit der gleichen Kraft auf dem Gegenkörper fixiert ist, wodurch ein Verbindungsvorgang mit hoher Wiederholungsgenauigkeit garantiert ist. Damit benötigt der Anwender keinerlei Wissen beispielsweise über das vom Hersteller vorgeschriebene Anzugsdrehmoment. Zudem ermöglicht die Verriegelungsvorrichtung eine präzise, sichere und zeitlich begrenzte oder dauerhafte Verbindung zwischen Grundkörper und dem Gegenkörper. Insbesondere verhindert die Verriegelungsvorrichtung, dass im Betrieb eine ungewollte Lösung der Verbindung zwischen dem Grundkörper und dem Gegenkörper erfolgt, die ein Überprüfen der Verbindung beispielsweise nach einer bestimmten Zeitdauer erfordert.

Die Verriegelungsvorrichtung kann zum Verbinden von wenigstens zwei Bauteilen dienen. Der Grundkörper kann mit einem ersten Bauteil und der Gegenkörper mit einem zweiten Bauteil verbunden sein. Dabei kann der Grundkörper einstückig mit dem ersten Bauteil, wie beispielsweise durch Verschweißen, Verkleben oder Verpressen. verbunden sein. Alternativ kann der Grundkörper lösbar mit dem ersten Bauteil verbunden sein. Der Gegenkörper kann analog zu dem Grundkörper einstückig, wie beispielsweise durch Verschweißen, Verkleben oder Verpressen, mit dem zweiten Bauteil verbunden sein. Alternativ kann der Gegenkörper lösbar mit dem zweiten Bauteil verbunden sein. Die Verbindung der zwei Bauteile kann durch ein Verriegeln des Grundkörpers mit dem Gegenkörper realisiert werden. Die lösbare Verbindung lässt sich in beiden Fällen durch beispielsweise eine Schraubverbindung realisieren.

Die Verriegelungsvorrichtung kann im Fahrzeugbereich eingesetzt werden. In diesem Fall kann der Grundkörper mit einer Radfelge oder einer Radaufnahme, wie beispielsweise eine Radachse oder Radnabe, als erstes Bauteil einstückig oder lösbar verbunden sein. Dementsprechend kann der Gegenkörper mit der Radaufnahme oder der Radnabe als zweites Bauteil einstückig oder lösbar verbunden sein. Alternativ oder zusätzlich kann die Verriegelungsvorrichtung im Flugzeugbereich eingesetzt werden. Insbesondere kann in dieser der Grundkörper mit einem Tragflügel oder Turbinenbestandteil als erstes Bauteil verbunden sein. Dementsprechend kann der Gegenkörper mit dem Turbinenbestandteil oder Tragflügel als zweites Bauteil verbunden sein. Bei diesem Einsatzgebiet kann sowohl eine vieleckige oder auch eine runde Ausgestaltung der verbindenden Komponenten die jeweils optimale Ausführungsform sein. Hierbei verhindert die vieleckige Ausgestaltung ein Verdrehen, der mechanischen Verbindung, wobei die runde Ausgestaltung gerade dies zulässt.

Natürlich ist der Einsatz der Verriegelungsvorrichtung nicht auf den zuvor genannten Einsatz im Fahrzeug- oder Flugzeugbereich begrenzt. Alternativ kann die Verriegelungsvorrichtung auch zur Montage von beispielsweise Mischtrommeln in Herstellungs- oder Fertigungsprozessen eingesetzt werden.

Im Sinne der Erfindung wird als Verriegelungsstellung des Verriegelungsmittels diejenige Stellung verstanden, in der das Verriegelungsmittels den Grundkörper und den Gegenkörper verriegelt und/oder miteinander verbindet. Ferner wird im Sinne der Erfindung als selbsttätige Bewegung des Betätigungsmittels eine Bewegung des Betätigungsmittels verstanden, die durch die Verschiebevorrichtung bewirkt wird. Das Betätigungsmittel kann sich somit nach der Initialisierung, ohne weiteres Einwirken des Anwenders allein aufgrund der durch die Verschiebevorrichtung ausgeübten Kraft in die Verriegelungsposition bewegen. Natürlich kann der Anwender die Bewegung des Betätigungsmittels durch ein Betätigen des Betätigungsmittels zusätzlich zu der Kraftausübung durch die Verschiebevorrichtung unterstützen.

In einer besonderen Ausführung kann die Verriegelungsvorrichtung eine Spanneinrichtung, wie beispielsweise eine Feder aufweisen. Die Feder kann aus Stahl oder aus Kunststoff gefertigt sein. Die Spanneinrichtung kann die Verschiebevorrichtung quer zu einer Mittelachse, insbesondere in Richtung zum Zentrum des Grundkörpers, spannen. Insbesondere kann die Spanneinrichtung die Verschiebevorrichtung in Richtung zu der Verriegelungsposition des Betätigungsmittels spannen. Der Grundkörper kann eine runde oder vieleckige Scheibe sein. Zudem kann der Grundkörper das mechanisch tragende Bauteil sein, auf das die beweglichen Komponenten der Verriegelungsvorrichtung angeordnet sind. Durch das Vorsehen der Spanneinrichtung kann auf einfache Weise sichergestellt werden, dass durch die Verschiebevorrichtung eine Kraft auf das Betätigungsmittel ausgeübt ist, um eine selbsttätige Bewegung von diesem zu realisieren.

Die Verschiebevorrichtung kann bistabil ausgebildet sein und somit zwei stabile Stellungen einnehmen. Darüber hinaus kann die Verschiebevorrichtung derart ausgebildet sein, dass die Verschiebung des Betätigungsmittels allein aufgrund mechanischer Komponenten erfolgt. Dies bedeutet, dass keine elektrischen Vorrichtungen, wie beispielsweise ein Aktuator, zur Verschiebung des Betätigungsmittels eingesetzt werden.

Nach Betätigen des Betätigungsmittels bewegt sich dieses von einer Entriegelungsposition in Richtung zu der Verriegelungsposition. Für den Fall, dass der Anwender das Betätigungsmittel nicht mehr betätigt und dieses den Totpunkt nicht erreicht hat, kann sich dieses zurück in die Entriegelungsposition zurückbewegen oder verharrt in der aktuellen Stellung. Für den Fall, dass der Anwender das Betätigungsmittel nicht mehr betätigt und dieses den Totpunkt überschritten hat, kann sich die Verschiebevorrichtung in eine stabile zweite Stellung bewegen und durch die Selbsthemmung dort verharren. Die Verschiebevorrichtung kann als eine, insbesondere bistabile, Klappvorrichtung ausgebildet sein, wobei die Klappvorrichtung bei einem Überschreiten des Totpunkts von einer ersten Klappstellung in eine zweite Klappstellung umklappt.

Im Ergebnis kann in der Verriegelungsvorrichtung der Verbindungsvorgang in zwei Phasen erfolgen. In einer ersten Phase kann die Betätigung des Betätigungsmittels durch den Anwender erfolgen, indem dieser eine Kraft auf das Betätigungsmittel ausübt, infolgedessen das Betätigungsmittel bis an den Totpunkt bewegt wird. Nach Überschreiten des Totpunktes kann eine zweite Phase erfolgen, in der das Betätigungsmittel durch die Verschiebevorrichtung selbsttätig in die Verriegelungsposition bewegt wird.

In einer besonderen Ausführung kann die Verschiebevorrichtung einer Bewegung des unbetätigten Betätigungsmittels aus der Entriegelungsposition in die Verriegelungsposition oder umgekehrt entgegenwirken, insbesondere verhindern. Dadurch wird erreicht, dass das Betätigungsmittel sich nicht selbstständig ohne Krafteinwirkung durch den Anwender oder die Verschiebevorrichtung sich nicht durch die Eigengewichtskraft oder Fliehkraft oder andere, äußere mechanische Kräfte bewegen kann. Im Ergebnis wird erreicht, dass das Betätigungsmittel in der aktuellen Stellung verharrt.

Die Verschiebevorrichtung kann wenigstens zwei Platten aufweisen, die gelenkig miteinander verbunden sind. Ferner können die Platten fluchtend miteinander verbunden sein. Die Platten können eine rechteckige oder quadratische Form aufweisen. Alternativ können die Platten eine halbrunde Form aufweisen. In dieser können die Platten als Form bzw. Gegenform ineinander greifen. Eine derartige Ausbildung der Platten bietet sich bei Ausführungen an, bei denen wenig Einbauplatz zur Verfügung steht. Natürlich können die Platten alternativ eine andere Form aufweisen. Ferner kann die Verschiebevorrichtung jeweils gelenkig mit dem Betätigungsmittel und dem Grundkörper verbunden sein. In der Entriegelungsposition und/oder Verriegelungsposition des Betätigungsmittels können die wenigstens zwei Platten selbsthemmend zueinander angeordnet sein. Dadurch wird auf einfache Weise erreicht, dass die Verschiebevorrichtung einer Bewegung des unbetätigten Betätigungsmittels aus der Entriegelungsposition in die Verriegelungsposition oder umgekehrt entgegenwirkt, insbesondere verhindert.

Die Spanneinrichtung kann mit der mit dem Grundkörper, insbesondere unmittelbar, verbundenen, ersten Platte verbunden sein. Ferner kann die Spanneinrichtung an dem von der ersten Platte entfernten Ende mit dem Grundkörper verbunden sein und somit eine Zugspannung auf die erste Platte ausüben. Alternativ kann die Spanneinrichtung mit der zweiten Platte oder dem zweiten Gelenk verbunden sein. Alternativ kann die Spanneinrichtung auf die erste Platte eine Druckspannung ausüben und mit dem von der ersten Platte entfernten Ende an einem anderen Bauteil der Verriegelungsvorrichtung verbunden sein.

Die Verbindung bzw. Verriegelung zwischen dem Grundkörper und dem Gegenkörper kann nur ausgelöst werden, wenn eine Auslösekraft, insbesondere eine von dem Benutzer ausgeübte Kraft, nach dem Hebelgesetz größer ist, als eine Kraft, die im Ruhezustand wirkt. Die Ruhekraft kann sich über die eingebaute Spanneinrichtung und die Momentanstellung der Platten zueinander ergeben. Es kann ein Reguliermittel vorgesehen sein, das die Krafteinwirkung oder den Hebelweg oder beides reguliert. Dadurch ist es möglich, die benötigte Auslösekraft zu verändern. Dies kann dadurch geschehen, dass die Spannkraft und somit die Kraft auf die erste Platte verändert wird. Dies kann beispielsweise über eine Stellfunktionalität erfolgen, welche die Spannkraft verändert.

In einer besonderen Ausführung kann das Betätigungsmittel wenigstens einen Schlitten zum Überführen des Verriegelungsmittels in die Verriegelungsstellung aufweisen. Der oder die Schlitten kann/können einstückig mit einem Rest des Betätigungsmittels ausgebildet sein. Alternativ können der oder die Schlitten und der Rest des Betätigungsmittels zwei- oder mehrstückig ausgebildet sein, wobei der oder die Schlitten mit dem Rest des Betätigungsmittels mechanisch fest oder gelenkig verbunden ist/sind. Der oder die Schlitten kann/können in Axialrichtung des Betätigungsmittels vorstehen. Beim Vorsehen von mehreren Schlitten können diese in Umfangsrichtung des Betätigungsmittels benachbart zueinander angeordnet sein. Für den Fall, dass das Betätigungsmittel keine Schlitten aufweist, kann dieses direkt mit dem Verriegelungsmittel verbunden sein. Für den Fall, dass das Betätigungsmittel wenigstens einen Schlitten aufweist, kann dieses über den Schlitten direkt mit dem Verriegelungsmittel verbunden sein.

Das oder die Verriegelungsmittel kann/können in dem Grundkörper, insbesondere in einem oder mehreren Loch/Löchern des Grundkörpers, angeordnet sein. Ferner kann der Grundkörper eine oder mehrere Aussparung/en aufweisen, in die das oder die Betätigungsmittel, insbesondere der oder die Schlitten, zum Überführen des oder der Verriegelungsmittel/s in die Verriegelungsstellung wenigstens teilweise eindringt/eindringen. Das jeweilige Loch und die jeweils zugehörige Aussparung sind miteinander verbunden.

Das Betätigungsmittel kann derart ausgebildet sein, dass dieses mit einem, oder mehreren, jeweils als Schlitten ausgebildeten Fortsätzen direkt in die Löcher hineinragt und dadurch in direkten Kontakt mit den Verriegelungsmitteln kommt. Weiterhin können die Schlitten und das Betätigungsmittel derart ausgebildet sein, dass diese jeweils als separate Komponenten gestaltet sind, wobei die Schlitten jeweils mechanisch fest oder beweglich mit dem Betätigungsmittel verbunden sind.

Zusätzlich können die Betätigungsmittel und/oder der Schlitten des Betätigungsmittels derart ausgebildet sein, dass diese in der Entriegelungsposition nicht mit dem Verriegelungsmittel in Kontakt sind. Ferner können das Betätigungsmittel und/oder der Schlitten des Betätigungsmittels derart ausgebildet sein, dass diese in der Verriegelungsposition mit dem Verriegelungsmittel, insbesondere unmittelbar, in Kontakt ist/sind und diese in die Verriegelungsstellung überführt, insbesondere drückt. Der zu dem Verriegelungsmittel weisende Teil des Betätigungsmittels und/oder Schlittens kann konisch ausgebildet sein, insbesondere einen konischen Zuschnitt aufweisen. Auf diese Weise kann ein einfaches Überführen bzw. Drücken des Verriegelungsmittels in die Verriegelungsstellung erreicht werden.

Das Verriegelungsmittel kann ein zylindrischer oder kugelförmiger Körper sein. Natürlich kann das Verriegelungsmittel auch eine andere Form aufweisen, solange sichergestellt ist, dass das Verriegelungsmittel eine Verriegelung zwischen dem Grundkörper und dem Gegenkörper sicherstellen kann.

In einer besonderen Ausführung kann ein Dichtmittel, insbesondere eine Gummi oder Elastomer-Dichtung, vorgesehen sein, das lediglich in der Verriegelungsposition des Betätigungsmittels die Verschiebevorrichtung abdichtet. Das Dichtmittel kann als Dichtring oder als Lippendichtung oder in einer anderen Form ausgeführt sein und kann an dem Grundkörper angeordnet sein oder an dem Betätigungsmittel. Das Betätigungsmittel kann einen sich in Axialrichtung erstreckenden Steg aufweisen. Der Steg kann eine derartige Länge aufweisen, dass dieser lediglich in der Verriegelungsposition des Betätigungsmittels die Verschiebevorrichtung abdichtet. Das Dichtmittel kann unmittelbar an dem Steg angeordnet sein. Alternativ kann das Dichtmittel an dem Grundkörper angeordnet sein, wobei der Steg in unmittelbaren Kontakt mit dem Dichtmittel gelangt, wenn das Betätigungsmittel in der Verriegelungsposition ist.

Der Steg kann im Querschnitt ringförmig ausgebildet sein und sich in radialer Richtung derart erstrecken, dass dieser die Verschiebevorrichtung umschließt. Im Ergebnis dichtet das Dichtmittel nach einem abgeschlossenen Verbindungsvorgang die Verschiebevorrichtung gegen ein Eindringen von Feuchtigkeit und Schmutz ab. Dies stellt sicher, dass die Verschiebevorrichtung nicht beschädigt oder durch Schmutz in deren Funktion beeinträchtigt wird.

Ferner kann die Verriegelungsvorrichtung eine Sicherungsvorrichtung aufweisen. Die Sicherungsvorrichtung kann zum Sichern des Betätigungsmittels in der Verriegelungsposition dienen. Durch das Vorsehen der Sicherungsvorrichtung ist verhindert, dass sich das Betätigungsmittel ungewollt aus der Verriegelungsposition in die Entriegelungsposition bewegt und damit die Verbindung löst. Die Sicherungsvorrichtung kann einen Sicherungsbolzen und eine mit dem Sicherungsbolzen gekoppelte, insbesondere exzentrische, Zylinderscheibe aufweisen. Der Sicherungsbolzen kann durch einen Anwender betätigt werden, wobei bei einer Betätigung des Sicherungsbolzens die Zylinderscheibe gedreht werden kann.

Insbesondere kann die Zylinderscheibe in eine Position gedreht werden, in der eine axiale Bewegung des Betätigungsmittels verhindert wird. Der Sicherungsbolzen kann von der Zylinderscheibe lösbar ausgebildet sein. Durch das Abziehen des Sicherungsbolzens kann dem Anwender signalisiert werden, dass der Verbindungsvorgang abgeschlossen ist. Gleichzeitig ist ein Schutz gegen Diebstahl erreicht, da ein Lösen der Verbindung nur durch den Sicherungsbolzen möglich ist. Eine Optimierung der Signalisierung nach erfolgtem Verbindungsvorgang kann erreicht werden, indem an dem zu entfernenden Sicherungsbolzen Farbmarkierungen vorgesehen sind und/oder wenigstens eine Signalfahne angebracht ist. Im Fall, dass ein oder mehrere Sicherungsbolzen vergessen wurden zu entfernen, wird dies deutlich sichtbar und der Anwender erkennt die Gefahr.

Die Sicherungsvorrichtung kann alternativ zu dem Sicherungsbolzen und der exzentrischen Zylinderscheibe einen Schließzylinder aufweisen. Der Schließzylinder kann mit dem Betätigungsmittel fest oder beweglich verbunden und mit diesem zusammen beweglich ausgebildet sein. Der Schließzylinder kann axial und zentrisch auf dem Betätigungsmittel befestigt sein, oder der Grundkörper des Schließzylinders bildet zusammen mit dem Betätigungsmittel ein zusammenhängendes Bauteil. Der Schließzylinder kann auf nur einer einzigen Seite eine Aufnahme für einen Schlüssel besitzen.

Die Sicherungsbohrung kann hierbei bei entsprechender Ausbildung des Schließzylinders rund sein, oder auch der im Querschnitt länglichen Form entsprechen, welche von Zylinderschlössern und Schließzylindern bekannt ist. Die erzielte Sicherungsfunktion, kann durch die Sperrklinke oder den Schließzapfen des Schließzylinders erzielt werden. Bei Drehung des Schlüssels wird die Sperrklinke oder der Schließzapfen aus einem Grundkörper des Schließzylinders herausgedreht und in eine Blockierstellung bewegt. Hierbei blockiert das Betätigungsmittel in der unteren axialen Position, wodurch eine unbeabsichtigte Entriegelung vermieden wird.

Beim Einsatz des Schließzylinders, kann eine Abdeckung gegen eindringende Feuchtigkeit und Schmutz vorgesehen werden. Dies kann beispielsweise eine Kunststoffkappe oder ein entsprechender Deckel sein, welche/r nach dem Abziehen des Schlüssels aufgeschoben, angebracht, oder vorgeschwenkt wird.

Insbesondere beim Einsatz der Verriegelungsvorrichtung im Fahrzeugbereich, vorzugsweise zum Verbinden einer Radfelge mit einer Radaufnahme, kann der Schließzylinder an dem Betätigungsmittel so angeordnet sein, dass dieser bei der axialen Bewegung des Betätigungsmittels durch eine axial und/oder zentrisch angeordnete Sicherungsbohrung gleiten kann. Diese axiale Sicherungsbohrung wiederum kann sich in einer zentralen Scheibe befinden, welche an der Außenseite der Radfelge durch Befestigungsstreben gehalten wird. Die äußern Enden dieser Befestigungsstreben sind an der Radfelge befestigt. Diese Befestigung kann durch Schraubverbindungen oder dadurch erfolgen, dass die zentrale Scheibe und die Befestigungsstreben, zusammen mit der Radfelge ein Bauteil bilden. Durch diese Anordnung wird erreicht, dass der Schließzylinder durch die Sicherungsbohrung hindurch gleitet kann und in der unteren Position des Betätigungsmittels diesen blockiert, wenn die Sperrklinke, bzw. der Schließzapfen des Schließzylinders durch Drehung des Schlüssels unter der zentralen Scheibe positioniert wird.

Die Verriegelungsvorrichtung und/oder der Gegenkörper können Codiermittel aufweisen, mittels denen sichergestellt ist, dass nur eine Verbindung von Bauteilen erfolgt, die zueinander passen. Bei dem Codiermittel kann es sich um Codierstifte und/oder entsprechend markierte Codierbohrungen handeln. So kann an einer zu dem Gegenkörper zugewandten Seite des Grundkörpers wenigstes ein Codierstift vorgesehen sein, der bei dem Aufschieben des Grundkörpers auf den Gegenkörper in eine korrespondierende Codierbohrung des Gegenkörpers eindringt. Natürlich kann alternativ der Codierstift an dem Gegenkörper und die dazu korrespondierende Codierbohrung am Grundkörper angeordnet sein. Für den Fall, dass die Codierung geändert werden soll, können Blindstopfen vorgesehen sein, die sich flexibel auf die korrespondierenden Codierbohrungen für die Codierstifte anbringen lassen.

Ineiner besonderen Ausführung, kann der Grundkörper ein Durchgangsloch aufweisen, in welches der Gegenkörper wenigstens teilweise eindringbar ist. Der Gegenkörper dringt in das Durchgangsloch ein, wenn eine Verriegelung und somit Verbindung zwischen dem Grundkörper und dem Gegenkörper realisiert werden soll.

Das Verriegelungsmittel kann derart in dem Grundkörper platziert sein, dass dieses in der Verriegelungsstellung in den Hohlraum des Grundkörpers, insbesondere in radialer Richtung, eingreift. Dabei kann das Verriegelungsmittel durch das Durchgangsloch hindurch, in eine am äußeren Umfang des Gegenkörpers angebrachte Nut des Gegenkörpers wenigstens teilweise eindringen oder eingreifen. Hierbei ist die Nut an dem Gegenkörper derart angeordnet, dass sich diese bei in den Grundkörper eingedrungenem Gegenkörper, oder auf den Gegenkörper aufgeschobenen Grundkörper, gegenüber der Aussparung und dem darin befindlichen Verriegelungsmittel befindet.

Die bereits genannte Nut kann sich vollständig oder teilweise um den Zapfen des Gegenkörpers erstrecken. Ferner kann der Gegenkörper einen Montagefuß aufweisen, von dem der Zapfen vorstehen kann. Der Zapfen kann in das Durchgangsloch des Grundkörpers wenigstens teilweise eindringen, wenn der Grundkörper auf den Gegenkörper aufgeschoben wird. Ferner kann der Zapfen im Querschnitt formkomplementär zu dem Durchgangsloch ausgebildet sein. Der Zapfen kann im Querschnitt rund oder mehrkantig ausgebildet sein.

Der mehrkantige oder vieleckige Zapfen dient zur Realisierung einer Verdrehsicherung, wie dies beispielsweise bei Radbefestigungen erforderlich ist. Der runde Zapfen dient zur Realisierung von drehbaren Verbindungen.

Eine Durchgangslochoberfläche kann derart gestaltet sein, dass der Grundkörper mit kleinstmöglicher Reibung, manuell auf den Gegenkörper aufgeschoben werden kann. Dies kann beispielsweise durch Läppen, oder durch das Aufbringen von gleitfähigen Oberflächen, wie Hartmetallen oder Kunststoffen, wie beispielsweise Teflon erfolgen. Die Spaltmaße sind soweit zu minimieren, bzw. zu optimieren, dass der Grundkörper mit kleinstmöglicher Reibung, manuell auf den Grundkörper aufgeschoben werden kann.

Bei der runden Ausgestaltung des Zapfens, kann die Berührungsfläche zwischen dem Zapfen und dem inneren Lochdurchmesser des Durchgangsloches als Lager, beispielsweise als Gleitlager ausgeführt werden.

Die Verriegelungsvorrichtung kann aus unterschiedlichen Materialien gefertigt werden. Wird eine kostengünstige Verriegelungsvorrichtung benötigt, welche nicht allzu hohen Krafteinwirkungen und keinen hohen oder auch niedrigen Temperaturen ausgesetzt ist, kann diese aus Kunststoffen realisiert werden. Bei der Übertragung hoher Drehmomente und hohen Kraftweinwirkungen, wie dies beispielsweise bei Radbefestigungen der Fall ist, muss die Verriegelungsvorrichtung aus Metall, oder alternativ aus der Kombination von Metall, in Verbindung mit Keramikwerkstoffen oder Kunststoffwerkstoffen oder faserverstärkten Kunststoffen hergestellt werden.

So kann beispielsweise der Grundkörper und der Gegenkörper aus Metall gefertigt werden, um große Kräfte aufnehmen zu können. Die Verschiebevorrichtung kann aus Kunststoffteilen bestehen, um dessen Kostenvorteile für die Fertigung oder Gewichtsersparnis der Verriegelungsvorrichtung zu nutzen. Damit ist es möglich, die Verriegelungsvorrichtung derart zu optimieren, dass an jeder Stelle der Verriegelungsvorrichtung das Material Verwendung findet, welches in Verbindung mit den Kostenvorgaben, für die zu lösende Aufgabe am besten geeignet ist.

Die Verriegelungsvorrichtungen kann in einer beispielhaften Ausgestaltung vier Verschiebevorrichtungen aufweisen, die in Umfangsrichtung um 90° versetzt angeordnet sind. Zudem kann die Verschiebevorrichtung vier Aussparungen und dementsprechend vier Schlitten aufweisen. Die Verriegelungsvorrichtung kann auch eine andere Anzahl von Verschiebevorrichtungen, Aussparungen und Schlitten aufweisen.

Die Verschiebevorrichtungen sind jedoch auch genauso eindimensional, zweidimensional, sechseckig, achteckig, usw. realisierbar, sogar eine kreisrunde Anordnung ist möglich, bis zur einer kreisrunden Bauform, die eine Krafteinwirkung von 360 Grad ermöglicht. Dies bedeutet, dass eine überproportionale Steigerung der Verbindungskräfte bei gleicher Baugröße realisiert werden kann.

Diese Ausführungen oder Weiterbildungen können bei Anwendungen eingesetzt werden, bei welchen besondere Kriterien erfüllt werden müssen. Wird eine erhöhte Verbindungskraft benötigt, kann eine vermehrte Anzahl und Anordnung der Verschiebevorrichtungen, bis hin zur kreisrunden Bauform, verwendet werden. Unter wirtschaftlichen Gesichtspunkten oder bei speziellen Gegebenheiten, kann auch lediglich eine einzige Verschiebevorrichtung eindimensional Anwendung finden.

Beim Einsatz der Verriegelungsvorrichtung oder der Verriegelungsanordnung in dem Fahrzeugbereich kann diese adaptiv ausgelegt werden. Hierzu wird die bisherige Schraubbefestigung für die Räder von Fahrzeugen dazu genutzt, die Verriegelungsvorrichtung auf die Radaufnahme oder Radnabe zu montieren. Somit wird keine Radfelge, sondern der Gegenkörper auf der Radaufnahme oder Radnabe verschraubt. Distanzringe, die zwischen Radaufnahme oder Radnabe und dem Gegenkörper angeordnet sind, ermöglichen unterschiedliche Einbautiefen der Verriegelungsvorrichtung. Mit diesen Distanzringen kann somit die Spurbreite von Fahrzeugen flexibel oder veränderbar gestaltet werden.

Weitere Vorteile ergeben sich dadurch, dass der erreichte Form- und Kraftschluss der Verbindung, konstruktionsbedingt immer mit gleicher Qualität erfolgt. Hierbei wird das Rad immer mit der gleichen Kraft auf der Fahrzeugachse fixiert. Damit benötigt der Anwender keinerlei Wissen über das vom Hersteller vorgeschriebene Anzugsdrehmoment, für eine Radmontage, da dies von dem Schnell-Verschlusssystem realisiert wird. Durch die Verriegelungsmechanik wird eine spätere Nachprüfung der korrekten Befestigung des Rades überflüssig, weil sich im Gegensatz zu Schraubverbindungen, keine Toleranzen in den Verbindungskräften mehr ergeben können. Dadurch entfällt eine spätere Kontrolle der Verschraubungen oder ein Nachziehen der Radschrauben, oder Radmuttern, wie dies bei Schraubverbindungen nach einem Radwechsel notwendig ist.

Durch die Codierfunktionalität wird ausgeschlossen, dass das Rad an einer nicht vorgesehenen Fahrzeugachse befestigt wird. Diese Funktionalität ist besonders bei laufrichtungsgebundenen Reifen, zu begrüßen. Durch die Verschiebevorrichtung wird eine Zeitersparnis beim Radwechsel erreicht. Die Verschiebevorrichtung sorgt auch dafür, dass keinerlei Hilfsmittel oder Werkzeuge für den Radwechsel benötigt werden. Durch diese Funktion müssen beim Anwender auch keine speziellen körperlichen Voraussetzungen für einen Radwechsel, beispielsweise beim Lösen festsitzender Radmuttern vorhanden sein.

Durch die Signalisierung, beispielsweise mittels des Sicherungsbolzens, nach dem Verbindungsvorgang, wird der Anwender informiert, dass das Rad korrekt montiert wurde. Dies kann derzeit bei einer Montage nur über ein spezielles Werkzeug wie einem Drehmomentschlüssel angezeigt werden welcher beim durchschnittlichen Anwender normalerweise nicht vorhanden ist. Durch die Sicherungsvorrichtung wird die unabsichtliche Betätigung des Systems verhindert. Gleichzeit wird ein Schutz gegen Diebstahl erreicht was derzeit nur über ein zusätzliches Felgenschloss realisiert werden kann.

Die zuvor genannten Vorteile ermöglichen, dass die Verriegelungsvorrichtung auch im Rennsport Verwendung finden kann, da nicht nur eine Zeitersparnis beim Radwechsel gegeben ist, sondern auch die fachgerechte und fehlerfreie Montage sichergestellt ist. Alternativ oder zusätzlich kann die Verriegelungsvorrichtung bei herkömmlichen Fahrzeugen zum Einsatz kommen, so dass ein Radwechsel in Fahrzeugwerkstätten unterbleiben kann und trotzdem sichergestellt ist, dass eine hohe Verbindungsqualität erreicht ist.

Bei Einsatz der Verriegelungsvorrichtung im Fahrzeugbereich kann die Radfelge zusammen mit dem Grundkörper als Metallguss oder in Schmiedetechnik aus Metall oder optional aus Kunststoff oder faserverstärktem Kunststoff oder Keramik hergestellt sein. Alternativ kann der Grundkörper und die Radfelge jeweils als separates Bauteil gefertigt sein. Diese beiden Bauteile oder Komponenten werden vorzugsweise durch Schraubverbindungen zusammengefügt.

Beim Einsatz der Verriegelungsvorrichtung zum Verbinden von Mischtrommeln kann der Grundkörper aus Stahl oder aus Aluminiumlegierungen oder anderen Metallen, in Guss- oder Schmiedetechnik hergestellt werden. Alternativ können hier auch Kunststoffe oder bei hohen Temperaturen Keramikwerkstoffe zur Anwendung kommen. Alternativ kann der Grundkörper auch durch zerspanende Fertigungsschritte aus Metall oder Kunststoff hergestellt werden.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1:: eine perspektivische Darstellung einer erfindungsgemäßen Verriegelungsvorrichtung,
- Fig. 2:: eine perspektivische Darstellung eines Gegenkörpers,
- Fig. 3:: eine Seitenschnittansicht durch den in Figur 2 dargestellten Gegenkörper,
- Fig. 4:: eine Seitenschnittansicht durch die Verriegelungsvorrichtung und den Gegenkörper vor einer Verbindung, wobei die Verriegelungsvorrichtung mit einer Radfelge verbunden ist,
- Fig. 5:: eine Seitenschnittansicht durch die Verriegelungsvorrichtung ohne Verschiebevorrichtung und Gegenkörper, wobei die Verriegelungsvorrichtung mit einer Radfelge verbunden ist,
- Fig. 6:: eine Seitenansicht der Verschiebevorrichtung,
- Fig. 7:: eine Seitenschnittansicht durch die Verriegelungsvorrichtung und den Gegenkörper nach einer Verbindung, wobei die Verriegelungsvorrichtung mit einer Radfelge verbunden ist,
- Fig. 8:: eine Draufsicht auf die Verriegelungsvorrichtung, wobei die Verriegelungsvorrichtung mit einer Radfelge verbunden ist.

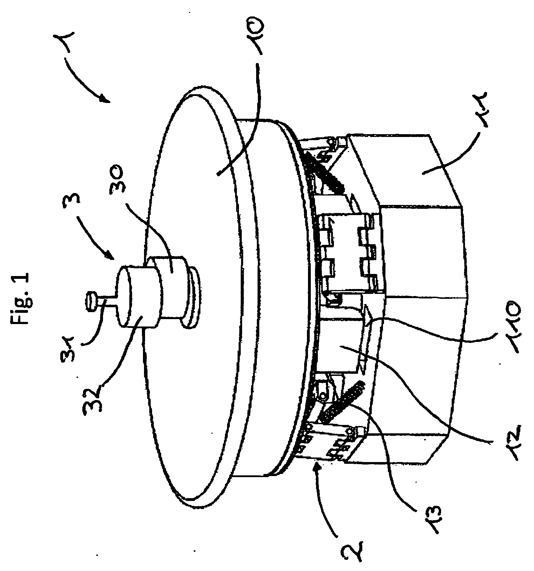

Die in Figur 1 gezeigte Verriegelungsvorrichtung 1 weist ein Betätigungsmittel 10 auf, das mit einer Sicherungsvorrichtung 3, insbesondere unmittelbar, verbunden ist. Die Sicherungsvorrichtung 3 weist einen Sicherungsbolzen 31, eine zylindrische Verlängerung 32 und eine exzentrische Zylinderscheibe 30 auf. Dabei trägt die zylindrische Verlängerung 32 den Sicherungsbolzen 31. Insbesondere weist die zylindrische Verlängerung 32 eine Aufnahme auf, in die der Sicherungsbolzen 31 lösbar eingeführt werden kann. Der Durchmesser der Zylinderscheibe 30 kann dem Durchmesser der zylindrischen Verlängerung 32 entsprechen.

An der der Sicherungsvorrichtung 3 gegenüberliegenden Seite des Betätigungsmittels 10 ist dieses über eine, oder wie in Fig. 1 beispielhaft dargestellt ist, vier mechanische Verschiebevorrichtung/en 2 in Form von Klappvorrichtungen mit einem Grundkörper 11 verbunden. Das Betätigungsmittel 10 ist relativ zu dem Grundkörper 11 bewegbar. Die Verschiebevorrichtung 2 ist über eine Spanneinrichtung 13 in Form einer Feder mit dem Grundkörper 11 gekoppelt. Die Spanneinrichtung 13 übt auf die Verschiebevorrichtung 2 eine Kraft in Richtung zu einem Zentrum des Grundkörpers 11, quer zu dessen Mittelachse aus. Ferner weist das Betätigungsmittel 10 an der von der Sicherungsvorrichtung 3 entfernten Seite, also der dem Grundkörper zugewandten Seite, in Axialrichtung des Betätigungsmittels vorragende Schlitten 12 auf, oder diese Schlitten sind fest oder beweglich mit dem Betätigungsmittel 10 verbunden. Der Grundkörper 11 kann mit einem in Figur 1 nicht dargestellten zu verbindenden, ersten Bauteil verbunden werden. Die Verbindung kann einstückig oder lösbar erfolgen. Der Grundkörper 11 weist Aussparungen 110 auf, in die bei einem Betätigen des Betätigungsmittels 10 die Schlitten 12 eingreifen können. Natürlich können die Schlitten 12 bei einem Entriegeln aus den Aussparung 110 wieder austreten. In der beispielhaften Darstellung von Fig. 1 sind vier Schlitten 12 vorhanden, wobei jedoch lediglich zwei Schlitten 12 zeichnerisch dargestellt sind.

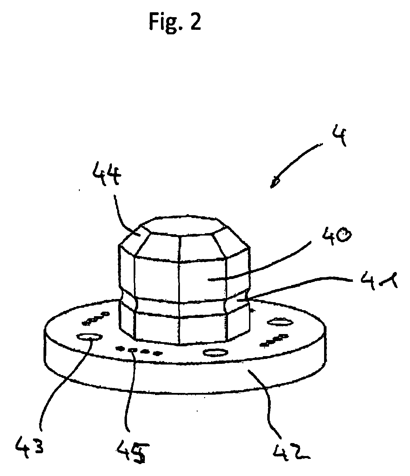

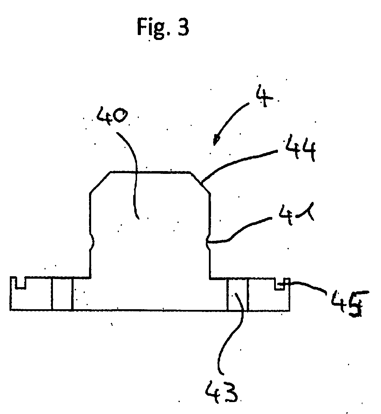

Die in Figur 1 dargestellte Verriegelungsvorrichtung 1 kann mit einem in Figur 2 und 3 dargestellten Gegenkörper 4 verbunden werden. Der Gegenkörper 4 weist einen Montagefuß 42 und einen sich von dem Montagefuß 42 erstreckenden Zapfen 40 auf. Der Zapfen 40 kann im Querschnitt achteckig ausgebildet sein. Der Montagefuß 42 kann mit dem Zapfen 40 fest verbunden sein oder bildet zusammen mit diesem ein homogenes Werkstück. Der Montagefuß 42 weist wenigstens eine Durchgangsbohrung 43 auf, über die dieser mit einem nicht dargestellten zu verbindenden, zweiten Bauteil lösbar verbunden werden kann. Natürlich ist auch eine Ausführung realisierbar, bei der der Gegenkörper 4 einstückig mit dem nicht dargestellten zweiten Bauteil verbunden ist. Der Zapfen 40 zusammen mit dem Montagefuß 5, wird vorzugsweise aus Metall oder Kunststoff oder faserverstärktem Kunststoff oder Keramik gefertigt.

Der Zapfen 40 weist eine umlaufende Nut 41 auf, die zum Verriegeln eines nachfolgend noch erläuterten Verbindungsvorgangs dient. Ferner weist der Zapfen 40 an seinem von dem Montagefuß 42 entfernten Ende, für jede Kante jeweils eine Abfasung 44 auf. Diese dient zum leichteren Einführen des Gegenkörpers 4 in die Verriegelungsvorrichtung 1. In dem Montagefuß 42 kann wenigstens eine Codierbohrung 45 vorgesehen sein, in die ein nicht dargestellter an der Verriegelungsvorrichtung angebrachter Codierstift eingreifen kann. Die Codierbohrung 45 dient zum Sicherstellen, dass jeweils zueinander zugehörige Gegenkörper 4 und Verriegelungsvorrichtungen 1 miteinander verbunden werden.

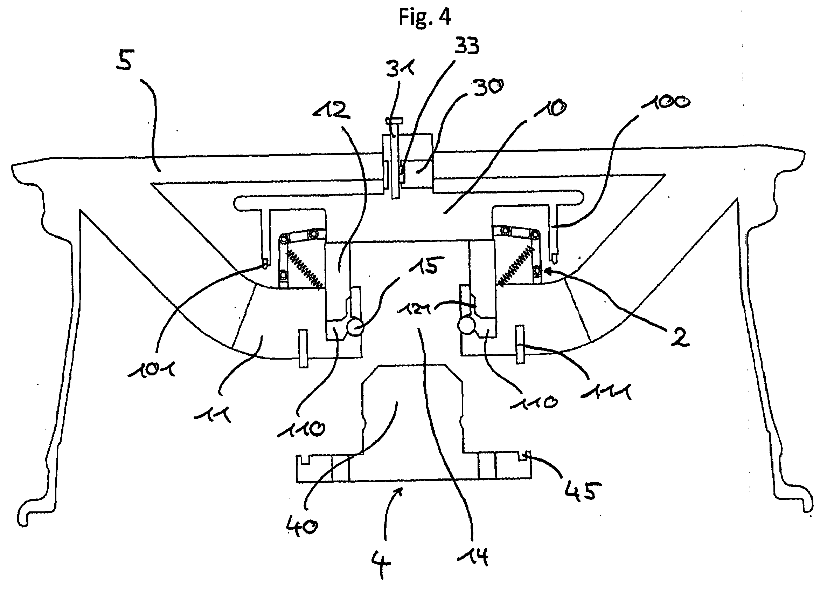

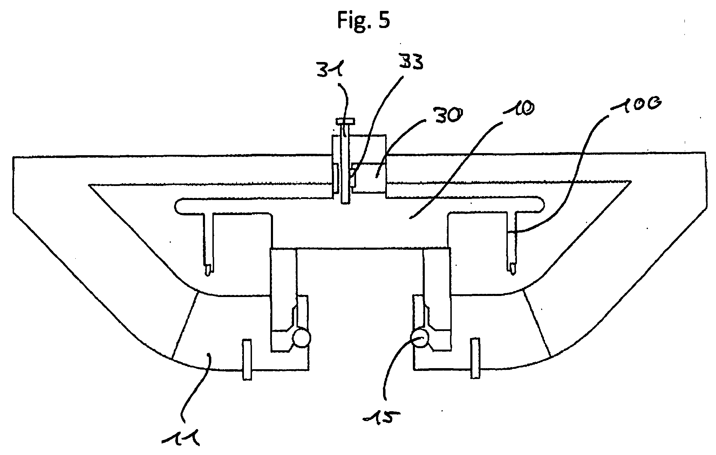

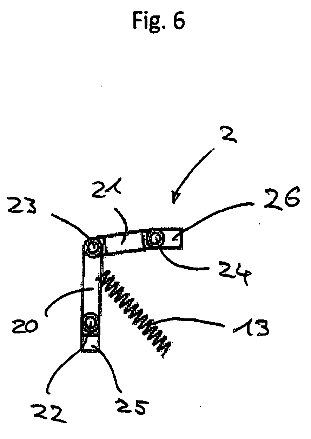

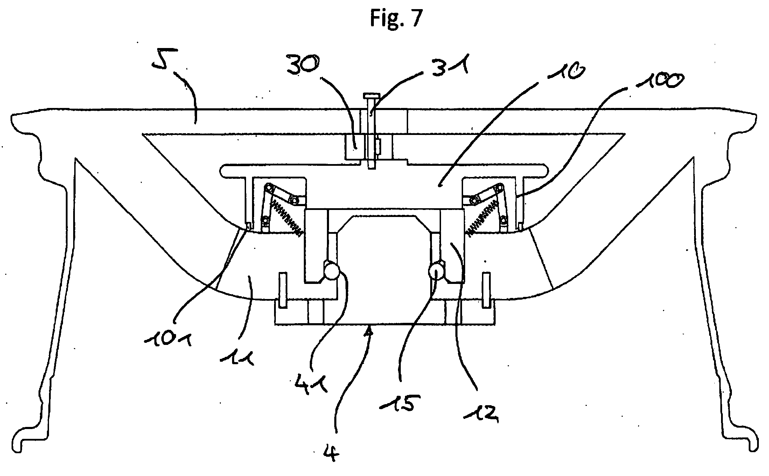

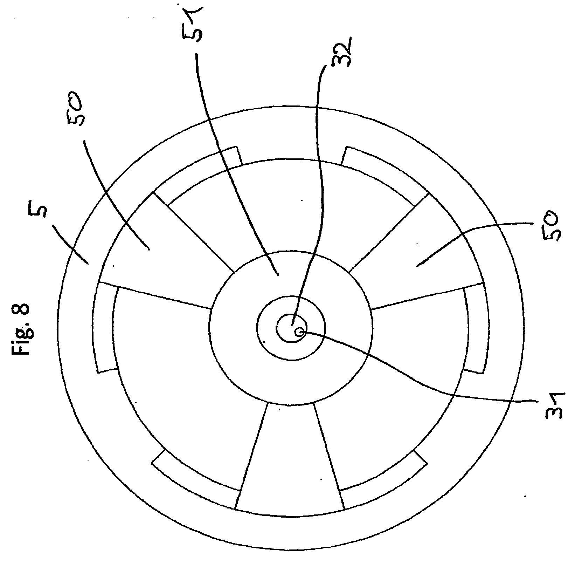

In den Figuren 4, 5, 7 und 8 wird eine Ausführung gezeigt, bei der die Verriegelungsvorrichtung 1 mit einer Radfelge 5 verbunden ist. Dabei zeigen die Figuren 4 und 5 einen Zustand bevor die Verriegelungsvorrichtung 1 mit dem Gegenkörper 4 verbunden ist und Figur 7 einen Zustand, nachdem die Verriegelungsvorrichtung 1 mit dem Gegenkörper 4 verbunden ist. Figur 8 zeigt eine Draufsicht auf die mit der Radfelge verbundene Verriegelungsvorrichtung 1. In Fig. 6 ist eine Detailansicht der Verschiebevorrichtung 2 mit deren Einzelkomponenten dargestellt.

Der Einsatz der Verriegelungsvorrichtung 1 ist nicht auf die Verbindung mit der Radfelge beschränkt, so dass sich die nachfolgenden Aussagen nicht lediglich auf den Einsatz der Verriegelungsvorrichtung 1 bei Radfelgen 5, sondern auf alle möglichen Einsatzgebiete beziehen.

Der Grundkörper 11 der Verriegelungsvorrichtung 1 ist mit der Radfelge 5, insbesondere einem Felgenkranz, einstückig verbunden. Natürlich ist auch eine nicht dargestellte Ausführung realisierbar, in der der Grundkörper 11 mittels beispielsweise einer Schraubverbindung mit der Radfelge 5 lösbar verbunden ist. Weiterhin kann die mechanische Verbindung beispielsweise auch durch Nieten oder Bolzen erfolgen. An dem zum Gegenkörper 4 weisenden Ende des Grundkörpers 11 sind Codierstifte 111 vorgesehen, die bei einer Kopplung des Gegenkörpers 4 mit der Verriegelungsvorrichtung 1 in die entsprechenden Codierbohrungen 45 des Gegenkörpers 4 eingreifen.

Der Grundkörper 11 weist ein Durchgangsloch 14 auf, in die der Gegenkörper 4, insbesondere der Zapfen 40 des Gegenkörpers 4 wenigstens teilweise eingreifen kann. Das Durchgangsloch 14 kann im Querschnitt achteckig ausgebildet sein. Die Aussparung 110 ist in radialer Richtung benachbart zu dem Durchgangsloch 14 vorgesehen, in die der Schlitten 12 des Betätigungsmittels 10 eingreift. In dem Grundkörper 11 ist ein bewegliches Verriegelungsmittel 15, beispielsweise in Form einer Kugel, vorgesehen. Das Verriegelungsmittel 15 ist in einem Loch des Grundkörpers 11 angeordnet, wobei das Loch mit der Aussparung 110 verbunden ist. In diese Aussparung 110 ragt der Schlitten 12, welcher an dem Betätigungsmittel 10 mechanisch fest oder beweglich befestigt ist, oder alternativ Teil des Betätigungsmittels 10 ist.

Das in Figur 4 dargestellte Verriegelungsmittel befindet sich in einer Entriegelungsstellung. In dieser ist dieses nicht in Kontakt mit dem Schlitten 12. Der Schlitten 12 weist an seinem zu dem Verriegelungsmittel 15 weisenden Ende einen konischen Zuschnitt 121 auf, mittels dem das Verriegelungsmittel 15 in radialer Richtung in das Durchgangsloch 14 gedrückt werden kann. Die in Fig. 4 beispielhaft dargestellte Ausführungsform beinhaltet vier Schlitten 12 und vier Verriegelungsmittel 15 in Form von vier Kugeln oder Rollen.

Wie bereits ausgeführt wurde, erfolgt die erfindungsgemäße Betätigung der Verriegelungsmittel 15 direkt durch das Betätigungsmittel 10 oder über Schlitten 12. Hierbei kann die erfindungsgemäße Ausgestaltung des Betätigungsmittels 10 und der Schlitten 12 auf folgende Arten erfolgen:
1. Das Betätigungsmittel 10 bildet zusammen mit den Schlitten 12 ein homogenes zusammenhängendes Werkstück oder Komponente. Hierbei kann dieses beispielsweise mittels Gusstechnik, oder Schmiedetechnik, oder durch zerspanende Fertigungsverfahren hergestellt werden.
2. Das Betätigungsmittel 10 und die Schlitten 12 werden jeweils als separate Komponenten gefertigt, welche mechanisch beweglich oder fest miteinander verbunden sind.

Das Betätigungsmittel 10 weist einen im Querschnitt ringförmigen Steg 100 auf. Der Steg erstreckt sich in radialer Richtung zum Grundkörper 11 weiter, als die Verschiebevorrichtung 2, so dass die Verschiebevorrichtung 2 innerhalb eines durch den Steg 100 begrenzten Raumes angeordnet ist. Der Steg 100 erstreckt sich in Axialrichtung des Betätigungsmittels 10 derart, dass dieser nicht in Kontakt mit dem Grundkörper 11 ist, wenn das Betätigungsmittel nicht betätigt, also in der Entriegelungsposition ist. An dem zum Grundkörper 11 weisenden Ende des Steges 100 ist ein Dichtmittel 101 angeordnet.

Die Sicherungsvorrichtung 3 weist einen Sicherungszapfen 33 auf, der mit dem Sicherungsbolzen 31 und der exzentrischen Zylinderscheibe 30 verbunden ist. Dies bedeutet, dass sich bei einer Drehung des Sicherungsbolzens 31 die exzentrische Zylinderscheibe 30 ebenfalls dreht.

Die in Figur 6 gezeigte Verschiebevorrichtung 2 weist eine erste Platte 20 auf, die über ein erstes Gelenk 22 mit dem in Figur 5 dargestellten Grundkörper 11 verbunden ist. Dabei ist das erste Gelenk 22 an einer Befestigungsplatte 25 angebracht, die mit dem Grundkörper 11 unmittelbar verbunden ist. Ferner weist die Verschiebevorrichtung 2 eine zweite Platte 21 auf, die über ein zweites Gelenk 23 mit der ersten Platte 20 verbunden ist. Die zweite Platte 21 ist an dem von dem zweiten Gelenk 23 entfernten Ende über ein drittes Gelenk 24 mit dem in Figur 5 dargestellten Betätigungsmittel 10 verbunden. Dabei ist das dritte Gelenk 24 über eine zweite Befestigungsplatte 26 unmittelbar mit dem Betätigungsmittel 10 verbunden. Die Spanneinrichtung 13 ist mit der ersten Platte 20 unmittelbar verbunden. Das erste und/oder dritte Gelenk 22, 24 können in Umfangsrichtung um 90° zueinander versetzt angeordnet sein.

Optional zu der beispielhaften Darstellung von Fig. 6, kann die Spanneinrichtung 13 auch mit der zweiten Platte 21 oder dem zweiten Gelenk 23 verbunden sein. Somit entsprechen auch diese Anordnungen der erfindungsgemäßen Gestaltung.

In Figur 7 ist die Verriegelungsvorrichtung in einer Stellung dargestellt, in der diese mit dem Gegenkörper 4 verbunden ist. Der Gegenkörper 4 ist in dem Durchgangsloch angeordnet. Das Betätigungsmittel 10 befindet sich in einer Verriegelungsposition, in der die Schlitten 12 des Betätigungsmittels 10 in Kontakt mit dem Verriegelungsmittel 15 sind. Die Schlitten 12 drücken das Verriegelungsmittel 15 in die Verriegelungsstellung. In dieser greift das Verriegelungsmittel 15 in die Nut 41 des Gegenkörpers 4 ein.

Das Betätigungsmittel 10 ist derart in axialer Richtung bewegt, dass das Dichtmittel 101 in Kontakt mit dem Grundkörper 11 ist. Ferner ist die Sicherungsvorrichtung 3 betätigt, so dass eine Rückbewegung des Betätigungsmittels aus der in Figur 7 dargestellten Verriegelungsposition in die in Figur 4 dargestellte Entriegelungsposition nicht möglich ist. Der Sicherungsbolzen 31 und damit die exzentrische Zylinderscheibe 30 wurden ausgehend von der in Figur 4 dargestellten Stellung derart gedreht, dass die exzentrische Zylinderscheibe in radialer Richtung von einer Sicherungsbohrung hervorsteht und gegen eine zentrale Scheibe anstößt, so dass eine axiale Bewegung des Betätigungsmittels nicht möglich ist.

In Figur 8 wird eine Draufsicht auf die Verriegelungsvorrichtung gezeigt, die mit der Radfelge verbunden ist. An der Radfelge 5 sind mindestens zwei Befestigungsstreben 50 angeformt oder mit der Radfelge 5 verschraubt. Hierbei ist in der Mitte der mindestens zwei Befestigungsstreben 50 eine zentrale Scheibe 51 vorhanden, in welcher eine zentrale Sicherungsbohrung angebracht ist. Die äußeren Enden der Befestigungsstreben 50 sind an der Radfelge 5 befestigt. Diese Befestigung kann durch Schraubverbindungen oder dadurch erfolgen, dass die zentrale Scheibe 51 und die Befestigungsstreben 50, zusammen mit dem der Radfelge 5 ein Bauteil bilden. Das bevorzugte Material zur Realisierung dieser Komponenten ist Metall oder Kunststoff oder faserverstärkter Kunststoff. In der Sicherungsbohrung können wenigstens ein Teil der zylindrischen Verlängerung 32 und der exzentrischen Zylinderscheibe 30 in axialer Richtung gleiten.

Für Anwendungen, bei welchen die Verriegelungsvorrichtung 1 gegenüber dem Zapfen 40 des Gegenkörpers 4 verdrehbar gestaltet werden muss, kann sowohl das Durchgangsloch 14, als auch der Zapfen 40 rund ausgeführt werden. Zur Verbesserung der drehbaren Lagerung können hierbei die Kontaktflächen zwischen dem Durchgangsloch 14 und dem Zapfen 40 als Gleitlager ausgeführt werden.

Im Folgenden wird der Verbindungsvorgang im Detail erörtert, wobei von der in Figur 4 dargestellten Stellung ausgegangen wird, in der die Verriegelungsvorrichtung 1 mit dem Gegenkörper 4 nicht verbunden ist.

In der in Figur 4 dargestellten Stellung befindet sich das Betätigungsmittel 10 in der Entriegelungsposition, in der dieses bzw. die Schlitten 12 des Betätigungsmittels 10 nicht in Kontakt mit dem Verriegelungsmittel 15 sind. In der Entriegelungsposition erfolgt keine selbsttätige Bewegung des Betätigungsmittels 10 aufgrund beispielsweise der Eigengewichtskomponente, da dieser Bewegung eine Selbsthemmung zwischen der ersten und zweiten Platte 20, 21 der Verschiebevorrichtung entgegenwirkt. Oder anders ausgedrückt, die Reibung zwischen der ersten und zweiten Platte 20, 21 ist größer als die Eigengewichtskomponente, so dass keine selbsttätige Bewegung des Betätigungsmittels 10 erfolgt.

Damit eine Verbindung bzw. Verriegelung zwischen der Verriegelungsvorrichtung 1 und dem Gegenkörper 4 hergestellt wird, muss der Anwender die Verriegelungsvorrichtung 1 auf den Gegenkörper, insbesondere bis zum Anschlag, aufsetzen. Anschließend muss der Anwender auf das Betätigungsmittel 10 eine Kraft ausüben, die das Betätigungsmittel in axialer Richtung verschiebt. Die Kraft muss größer sein als die Reibkraft zwischen der ersten und zweiten Platte 20,21 und der Federkraft der Spanneinrichtung 13 der Verschiebevorrichtung. Für den Fall, dass dies erfolgt, bewegt sich das Betätigungsmittel 10 axial in Richtung zu dem Grundkörper 11 und somit in die Verriegelungsposition. Bei der Bewegung des Betätigungsmittels 10 bewegen sich auch automatisch die Schlitten 12 in Richtung zu dem jeweiligen Verriegelungsmittel 15 innerhalb der Aussparung 110. Der Anwender kann auch auf die von der zentralen Scheibe 51 vorstehende zylindrische Verlängerung 32 die Kraft ausüben, um eine Bewegung des Betätigungsmittels 10 zu bewirken. Die zylindrische Verlängerung 32 und die exzentrische Zylinderscheibe 30 bewegen sich innerhalb der Sicherungsbohrung.

Bei einem Betätigen des Betätigungsmittels 10 erfolgt ein Umlenken der Kräfte durch die Gelenke 22, 23, 24. Diese bilden die beweglichen Drehpunkte, mit welchen jeweils die beiden Platten 20, 21 der Verschiebevorrichtung 2 mit dem Grundkörper 11 und dem Betätigungsmittel 10 verbunden sind. Somit wird die extern zugeführte Kraft umgelenkt und wirkt entgegen der einwirkenden Federkraft der Spanneinrichtung 13. Die zweiten Platten 21 werden heruntergedrückt, wenn die durch den Anwender auf das Betätigungsmittel 10 extern zugeführte Kraft größer ist, als die durch die vier Spanneinrichtungen 13 erzeugte Federkraft.

Dabei muss durch den Anwender eine Kraft auf das Betätigungsmittel 10 ausgeübt werden bis dieses über den Totpunkt hinaus bewegt wurde. In dem Totpunkt befindet sich das zweite Gelenk 23 und ein Krafteingriffspunkt der Spanneinrichtung 13 mit der ersten Platte 20 in der gleichen Ebene. Bei einer Bewegung des Betätigungsmittels 10 in axialer Richtung bewegen sich auch gleichzeitig die zylindrische Verlängerung 32 und die exzentrische Zylinderscheibe 30 innerhalb der Sicherungsbohrung der zentralen Scheibe 35 in die gleiche Richtung wie das Betätigungsmittel 10.

Nach Überschreiten des Totpunkts bewirkt eine durch die Verschiebevorrichtung 2 auf das Betätigungsmittel 10 ausgeübte Kraft, dass sich das Betätigungsmittel 10 selbsttätig in die Verriegelungsposition bewegt. Die Kraft resultiert im Wesentlichen daraus, dass die Spanneinrichtung 13 auf die Verschiebevorrichtung 2 eine in Richtung zum Zentrum des Grundkörpers 11 gerichtete Kraft ausübt. Wird nun der Totpunkt überschritten und der Anwender übt weiterhin eine Kraft auf das Betätigungsmittel aus, summieren sich die einwirkenden Kräfte und die Platten 20, 21 der Verschiebevorrichtungen 2, werden V-förmig und in Richtung des Betätigungsmittels 10 zusammengedrückt. Zudem erfolgt nach Überschreiten des Totpunktes ein Umklappen der Verschiebevorrichtung 2. Durch den Anwender muss nach Überschreiten des Totpunktes keine weitere Kraft auf das Betätigungsmittel ausgeübt werden, um eine Bewegung des Betätigungsmittels 2 in die Verriegelungsposition zu bewirken. Natürlich kann durch den Anwender auch weiterhin eine Kraft ausgeübt werden.

In der Verriegelungsposition des Betätigungsmittels sind die erste und zweite Platte 20, 21 erneut derart zueinander angeordnet, dass eine Selbsthemmung zwischen diesen eine selbsttätige, also ohne äußere Krafteinwirkung bedingte, Rückbewegung des Betätigungsmittels in die Entriegelungsposition verhindert. In der Verriegelungsposition sind die Schlitten 12 des Betätigungsmittels 10 mit dem jeweiligen Verriegelungsmittel 15 in Kontakt. Insbesondere drücken die Schlitten 12 das Verriegelungsmittel 15 in radialer Richtung aus dem Grundkörper 10 in das Durchgangsloch 14 hinaus. Da der Gegenkörper 4 in dem Durchgangsloch 14 angeordnet ist, greifen die Verriegelungsmittel 15 wenigstens teilweise in die Nut 41 des Gegenkörpers 4.

Durch das Eingreifen der Verriegelungsmittel 15 in die Nut 41 kann eine Verbindung und Verriegelung zwischen der Verriegelungsvorrichtung 1 und dem Gegenkörper 4 realisiert werden. Dementsprechend kann eine Verbindung und Verriegelung zwischen einem ersten Bauteil, wie der Radfelge, das mit der Verriegelungsvorrichtung 1 verbunden ist und einem zweiten Bauteil, wie beispielsweise einer nicht dargestellten Radaufnahme oder Radnabe, realisiert werden.

Um eine über die zuvor genannte Selbsthemmung hinausgehende Sicherung zu realisieren, so dass sichergestellt ist, dass sich das Betätigungsmittel 10 nicht selbsttätig ungewollt in die Entriegelungsposition bewegt, kann die Sicherungsvorrichtung 3 betätigt werden. Insbesondere kann der Sicherungsbolzen 31 in die Aufnahme der zylindrischen Verlängerung eingeführt und gedreht werden. Aufgrund der Drehung des Sicherungsbolzens 31 dreht sich die exzentrische Zylinderscheibe 30 derart, dass diese in radialer Richtung über die in der zentralen Scheibe 35 vorgesehene Sicherungsbohrung hinausragt. Insbesondere ist die exzentrische Zylinderscheibe 30 unter die Innenseite der zentralen Scheibe 35 positioniert, wodurch diese auf der Innenseite der zentralen Scheibe 35 aufliegt. Dies führt zur Blockierung der gesamten Verriegelungsmechanik in der Verriegelungsposition.

Zudem ist in der Verriegelungsposition des Betätigungsmittels 10 das an dem Steg 100 angebrachte Dichtmittel 101 mit dem Grundkörper 11 in Kontakt. Dadurch wird eine Abdichtung der Verschiebevorrichtung 2 erzielt. Dabei ist eine Anpresskraft des Dichtmittels 101 deutlich kleiner als eine Haltekraft der Verschiebevorrichtungen 2.

### Bezugszeichenliste

- 1: Verriegelungsvorrichtung
- 2: Verschiebevorrichtung
- 3: Sicherungsvorrichtung
- 4: Gegenkörper
- 5: Radfelge
- 10: Betätigungsmittel
- 11: Grundkörper
- 12: Schlitten
- 13: Spanneinrichtung
- 14: Durchgangsloch
- 15: Verriegelungsmittel
- 20: erste Platte
- 21: zweite Platte
- 22: erstes Gelenk
- 23: zweites Gelenk
- 24: drittes Gelenk
- 25: erste Befestigungsplatte
- 26: zweite Befestigungsplatte
- 30: exzentrische Zylinderscheibe
- 31: Sicherungsbolzen
- 32: zylindrische Verlängerung
- 33: Sicherungszapfen
- 40: Zapfen
- 41: Nut
- 42: Montagefuß
- 43: Durchgangsbohrung
- 44: Abfasung
- 45: Codierbohrung
- 50: Befestigungsstrebe
- 51: zentrale Scheibe
- 100: Steg
- 101: Dichtmittel
- 110: Aussparung
- 111: Codierstift
- 121: konischer Zuschnitt

## Patentansprüche

1. Verriegelungsvorrichtung (1) mit einem Grundkörper (11), einem Verriegelungsmittel (15) zum Verriegeln des Grundkörpers (11) mit einem Gegenkörper (4), einem zum Grundkörper (11) relativ bewegbaren Betätigungsmittel (10), das mit dem Verriegelungsmittel (15) in Kontakt bringbar ist, und wenigstens einer Verschiebevorrichtung (2), wobei die Verschiebevorrichtung (2) mit dem Betätigungsmittel (10) und dem Grundkörper (11) verbunden ist und wobei das Betätigungsmittel (10) das Verriegelungsmittel (15) in eine Verriegelungsstellung überführt und in der Verriegelungsposition mit dem Verriegelungsmittel (15) in Kontakt ist, **dadurch gekennzeichnet, dass** die Verschiebevorrichtung bei einem Betätigen des Betätigungsmittels (10) dieses selbsttätig in eine Verriegelungsposition bewegt, wobei die Verschiebevorrichtung (2) das Betätigungsmittel (10) erst nach Überschreiten eines Totpunkts selbsttätig in die Verriegelungsposition bewegt.

2. Verriegelungsvorrichtung (1) nach Anspruch 1, **gekennzeichnet durch** eine Spanneinrichtung (13), die die Verschiebevorrichtung (2) quer zu einer Mittelachse des Betätigungsmittels (10) spannt.

3. Verriegelungsvorrichtung (1) nach einem der vorhergehenden Ansprüche, **dadurch gekennzeichnet, dass** die Verschiebevorrichtung (2) einer Bewegung des unbetätigten Betätigungsmittels (10) aus einer Entriegelungsposition in die Verriegelungsposition oder umgekehrt entgegenwirkt.

4. Verriegelungsvorrichtung (1) nach einem der vorhergehenden Ansprüche, **dadurch gekennzeichnet, dass** die mechanische Verschiebevorrichtung (2) wenigstens zwei Platten (20, 21) aufweist, die gelenkig miteinander verbunden sind.

5. Verriegelungsvorrichtung (1) nach dem Anspruch 4, **dadurch gekennzeichnet, dass** in der Entriegelungsposition und/oder der Verriegelungsposition des Betätigungsmittels (10) die wenigstens zwei Platten (20, 21) selbsthemmend zueinander angeordnet sind.

6. Verriegelungsvorrichtung (1) nach einem der Ansprüche 2 bis 5, **dadurch gekennzeichnet, dass** eine Spanneinrichtung (13) mit einer mit dem Grundkörper (11) verbundenen ersten Platte (20) oder einer zweiten Platte (21) oder einem zweiten Gelenk (23) verbunden ist.

7. Verriegelungsvorrichtung (1) nach einem der vorhergehenden Ansprüche, **dadurch gekennzeichnet, dass** das Betätigungsmittel (10) wenigstens einen Schlitten (12), insbesondere wenigstens einen mit diesem verbundenen Schlitten (12), zum Überführen des Verriegelungsmittels (15) in die Verriegelungsstellung aufweist, wobei das Verriegelungsmittel (15) im Grundkörper (11) angeordnet ist.

8. Verriegelungsvorrichtung (1) nach einem der vorhergehenden Ansprüche, **dadurch gekennzeichnet, dass** der Grundkörper (11) eine Aussparung (110) aufweist, in die das Betätigungsmittel (10), insbesondere der Schlitten (12), zum Überführen des Verriegelungsmittels (15) in die Verriegelungsstellung wenigstens teilweise eindringt.

9. Verriegelungsvorrichtung (1) nach einem der vorhergehenden Ansprüche, **gekennzeichnet durch** ein am Betätigungsmittel (10) angeordnetes, Dichtmittel (101), das lediglich in der Verriegelungsposition des Betätigungsmittels (10) die Verschiebevorrichtung (2) abdichtet.

10. Verriegelungsvorrichtung (1) nach einem der vorhergehenden Ansprüche, **gekennzeichnet durch** eine Sicherungsvorrichtung (3) zum Sichern des Betätigungsmittels (10) in der Verriegelungsposition.

11. Verriegelungsvorrichtung (1) nach einem der vorhergehenden Ansprüche, **dadurch gekennzeichnet, dass** der Grundkörper (11) ein Durchgangsloch (14) aufweist, in das der Gegenkörper (4) wenigstens teilweise eindringbar ist..

12. Verriegelungsvorrichtung (1) nach Anspruch 11, **dadurch gekennzeichnet, dass** dieses Durchgangsloch (14) ein Vieleck darstellt und der Zapfen (40) des Gegenkörpers (4) die hierzu passende vieleckige Form aufweist.

13. Verriegelungsvorrichtung (1) nach einem der vorhergehenden Ansprüche, **dadurch gekennzeichnet, dass** der Grundkörper (11) mit einer der Radfelge oder einer Radaufnahme verbindbar oder, insbesondere einstückig, verbunden ist und/oder der Gegenkörper (4) mit der anderen Radfelge oder Radaufnahme verbindbar oder, insbesondere einstückig, verbunden ist.

14. Verriegelungsanordnung mit einer Verriegelungsvorrichtung nach einem der vorhergehenden Ansprüche in Kombination mit einem Gegenkörper (4), der mit dem Grundkörper (11) verbindbar oder verbunden ist.

15. Verriegelungsanordnung nach Anspruch 14, **dadurch gekennzeichnet, dass** der Gegenkörper (4) eine insbesondere umlaufende Nut (41) aufweist, in die das Verriegelungsmittel (15) zum Verriegeln eindringt.

16. Verriegelungsanordnung nach Anspruch 15, **dadurch gekennzeichnet, dass** der Gegenkörper (4) einen Montagefuß (42) aufweist, von dem ein Zapfen (40) vorsteht, der in das Durchgangsloch (14) der Verriegelungsvorrichtung (1) wenigstens teilweise eindringt.

17. Verriegelungsanordnung nach einem der Ansprüche 14 bis 16, **dadurch gekennzeichnet, dass** die Kontaktflächen des Durchgangslochs 14 zu dem Zapfen 40 als Gleitlager ausgeführt sind.

## Claims

1. Locking device (1) having a base body (11), a locking means (15) for locking the base body (11) to a counter body (4), an actuation means (10) movable relative to the base body (11), said actuation means being able to be brought into contact with the locking means (15), and at least one displacement device (2), wherein the displacement device (2) is connected to the actuation means (10) and to the base body (11) and wherein the actuation means (10) transfers the locking means (15) into a locking position and is in contact with the locking means (15) in the locking position, **characterised in that** the displacement device (2) in the case of actuating the actuation means (10), the actuation means automatically moves into a locking position, wherein the displacement device (2) automatically moves the actuation means (10) into the locking position only after exceeding a centre point.

2. Locking device (1) according to claim 1, **characterised by** a tensioning device (13), which tensions the displacement device (2) transverse to a central axis of the actuation means (10).

3. Locking device (1) according to one of the preceding claims, **characterised in that** the displacement device (2) counteracts a movement of the unactuated actuation means (10) from an unlocking position into the locking position or vice versa.

4. Locking device (1) according to one of the preceding claims, **characterised in that** the mechanical displacement device (2) has at least two plates (20, 21), which are articulatedly connected to each other.

5. Locking device (1) according to claim 4, **characterised in that** the at least two plates (20, 21) are arranged in a self-locking manner in relation to each other in the unlocking position and/or in the locking position of the actuation means (10).

6. Locking device (1) according to one of claims 2 to 5, **characterised in that** a tensioning device (13) is connected to a first plate (20) connected to the base body (11) or to a second plate (21) or to a second joint (23).

7. Locking device (1) according to one of the preceding claims, **characterised in that** the actuation means (10) has at least one slide (12), in particular at least one slide (12) connected to said actuation means in order to transfer the locking means (15) into the locking position, wherein the locking means (15) is arranged in the base body (11).

8. Locking device (1) according to one of the preceding claims, **characterised in that** the base body (11) has a recess (110), into which the actuation means (10), in particular the slide, (12) at least partially penetrates in order to transfer the locking means (15) into locking position.

9. Locking device (1) according to one of the preceding claims, **characterised by** a sealant (101) arranged on the actuation means (10), which merely seals the displacement device (2) in the locking positon of the actuation means (10).

10. Locking device (1) according to one of the preceding claims, **characterised by** a securing device (3) for securing the actuation means (10) in the locking position.

11. Locking device (1) according to any one of the preceding claims, **characterised in that** the base body (11) has a through-hole (14), into which the counter body (4) can at least partially penetrate.

12. Locking device (1) according to claim 11, **characterised in that** this through-hole (14) constitutes a polygon and the pin (40) of the counter body (4) has the polygonal form suitable therefor.

13. Locking device (1) according to one of the preceding claims, **characterised in that** the base body (11) is connectable or, in particular is integrally connected to a wheel rim or to a wheel retainer and/or the counter body (4) is connectable or, in particular is integrally connected to another wheel rim or wheel retainer.

14. Locking arrangement having a locking device according to one of the preceding claims in combination with a counter body (4), which is connectable or connected to the base body (11).

15. Locking arrangement according to claim 14, **characterised in that** the counter body (4) has an, in particular, circumferential groove (41), into which the locking means (15) penetrates for locking.

16. Locking arrangement according to claim 15, **characterised in that** the counter body (4) has a mounting foot (42), from which a pin (40) protrudes, which at least partially penetrates into the through-hole (14) of the locking device (1).

17. Locking arrangement according to one of claims 14 to 16, **characterised in that** the contact surfaces of the through-hole 14 to the pin 40 are configured as slide bearings.

## Revendications

1. Dispositif de verrouillage (1) ayant une structure de base (11), un moyen de verrouillage (15) permettant de bloquer la structure de base (11) à une structure antagoniste (4), un moyen d'actionnement (10) mobile par rapport à la structure de base (11), ledit moyen d'actionnement étant capable d'entrer en contact avec le moyen de verrouillage (15), et au moins un dispositif de déplacement (2), où le dispositif de déplacement (2) est connecté au moyen d'actionnement (10) et à la structure de base (11) et où le moyen d'actionnement (10) transfère le moyen de verrouillage (15) vers une position de verrouillage et est en contact avec le moyen de verrouillage (15) dans la position de verrouillage, **caractérisé en ce que** le dispositif de déplacement (2) permet d'actionner le moyen d'actionnement (10), lorsque le moyen d'actionnement se déplace automatiquement vers la position de verrouillage, où le dispositif de déplacement (2) déplace automatiquement le moyen d'actionnement (10) vers la position de verrouillage uniquement après dépassement d'un point mort.

2. Dispositif de verrouillage (1) selon la revendication 1, **caractérisé par** un dispositif tendeur (13), qui tend le dispositif de déplacement (2) perpendiculairement à un axe central du moyen d'actionnement (10).

3. Dispositif de verrouillage (1) selon l'une quelconque des revendications précédentes, **caractérisé en ce que** le dispositif de déplacement (2) neutralise un mouvement du moyen d'actionnement non actionné (10) d'une position de déverrouillage vers une position de verrouillage ou vice versa.

4. Dispositif de verrouillage (1) selon l'une quelconque des revendications précédentes, **caractérisé en ce que** le dispositif de déplacement mécanique (2) possède au moins deux plaques (20, 21), qui sont connectées de manière articulée l'une à l'autre.

5. Dispositif de verrouillage (1) selon la revendication 4, **caractérisé en ce que**, dans la position de déverrouillage et/ou dans la position de verrouillage du moyen d'actionnement (10), les deux plaques (20, 21) au moins sont prévues de manière autobloquante l'une par rapport à l'autre.

6. Dispositif de verrouillage (1) selon l'une des revendications 2 à 5, **caractérisé en ce qu'**un dispositif de tension (13) est connecté à une première plaque (20) connectée à la structure de base (11) ou bien à une seconde plaque (21) ou une seconde articulation (23).

7. Dispositif de verrouillage (1) selon l'une quelconque des revendications précédentes, **caractérisé en ce que** le moyen d'actionnement (10) présente au moins un chariot (12), en particulier au moins un chariot (12) connecté audit moyen d'actionnement afin de transférer le moyen de verrouillage (15) en position de verrouillage, où le moyen de verrouillage (15) est prévu dans la structure de base (11).

8. Dispositif de verrouillage (1) selon l'une quelconque des revendications précédentes, **caractérisé en ce que** la structure de base (11) présente un évidement (110), dans lequel pénètre le moyen d'actionnement (10), en particulier le chariot, (12) au moins partiellement afin de transférer le moyen de verrouillage (15) en position de verrouillage.

9. Dispositif de verrouillage (1) selon l'une quelconque des revendications précédentes, **caractérisé par** un produit d'étanchéité (101) prévu sur le moyen d'actionnement (10), qui se contente de sceller le dispositif de déplacement (2) en position de verrouillage du moyen d'actionnement (10).

10. Dispositif de verrouillage (1) selon l'une quelconque des revendications précédentes, **caractérisé par** un dispositif de fixation (3) permettant de fixer le moyen d'actionnement (10) dans la position de verrouillage.

11. Dispositif de verrouillage (1) selon l'une quelconque des revendications précédentes, **caractérisé en ce que** la structure de base (11) possède un trou traversant (14), dans lequel peut pénétrer la structure antagoniste (4) au moins partiellement.

12. Dispositif de verrouillage (1) selon la revendication 11, **caractérisé en ce que** ce trou traversant (14) constitue un polygone et le tourillon (40) de la structure antagoniste (4) est de forme polygonale prévue à cet effet.

13. Dispositif de verrouillage (1) selon l'une quelconque des revendications précédentes, **caractérisé en ce que** la structure de base (11) peut être connectée ou, en particulier est solidaire d'une jante de roue ou d'un support de roue et/ou que la structure antagoniste (4) peut être connecté ou, en particulier est solidaire d'une autre jante de roue ou autre support de roue.

14. Configuration de verrouillage comportant un dispositif de verrouillage selon l'une quelconque des revendications précédentes, en combinaison avec une structure antagoniste (4), qui peut être connectée ou bien est connectée à la structure de base (11).

15. Configuration de verrouillage selon la revendication 14, **caractérisé en ce que** la structure antagoniste (4) présente, en particulier, une rainure circonférentielle (41) dans laquelle pénètre le moyen de verrouillage (15) à des fins de verrouillage.

16. Configuration de verrouillage selon la revendication 15, **caractérisée en ce que** la structure antagoniste (4) comporte un pied de montage (42), dont dépasse un tourillon (40) qui, au moins partiellement, pénètre dans le trou traversant (14) du dispositif de verrouillage (1).

17. Configuration de verrouillage selon l'une des revendications 14 à 16, **caractérisée en ce que** les surfaces de contact du trou traversant (14) à la broche (40) sont des paliers coulissants.
